# EUROPÄISCHE PATENTANMELDUNG

(11) **EP 2 213 628 A1**
(43) Veröffentlichungstag der Anmeldung: **04.08.2010**
(21) Anmeldenummer: 09000233.8
(22) Anmeldetag: 09.01.2009
(51) Int. Cl.: C02F 3/22

(54) **Kläranlage und Haltestruktur**

(71) Anmelder: Kessel GmbH, 85101 Lenting (DE)
(72) Erfinder: Die Erfindernennung liegt noch nicht vor
(74) Vertreter: Grünecker, Kinkeldey, Stockmair & Schwanhäusser Anwaltssozietät

(57) **Zusammenfassung**

In einer Kläranlage (A) mit durch zumindest eine Trennwand (3) separierten Kammern (5, 6), wenigstens einer Funktionskomponente wie einem Druckluftheber (H1 - H3) in jeweils einer der Kammern, und einer Haltestruktur (C) für die Funktionskomponenten, ist die Haltestruktur (C) ein Kunststoff-Formteil zur gleichzeitigen Montage wenigstens einer Funktionskomponente jeder Kammer (5, 6), das für die Funktionskomponenten in beiden Kammern (5, 6) jeweils eine Strömungsleitfunktion aufweist. Die Haltestruktur (C) ist in Montierlage von oben rittlings auf die Trennwand (3) aufgesteckt und entgegengesetzt zur Auftriebsrichtung durch eine quer zur Aufsteckrichtung elastisch aufweitbare Rastverbindung an der Trennwand (3) festgelegt. Die Haltestruktur weist eine elastisch aufweitbare Rastaufnahme (16) und oberseitige Befestigungsbereiche (11) für Druckluftheber (H1 - H3) auf.

## Beschreibung

Die Erfindung betrifft eine Kläranlage gemäß Oberbegriff des Patentanspruchs 1 sowie eine Haltestruktur gemäß Oberbegriff des Patentanspruchs 10.

Bei der aus DE 20 2007 002 465 U1 bekannten Kleinkläranlage ist die Haltestruktur eine H-förmige Rohrkonstruktion, deren vertikale Rohre außenseitige Längsschlitze zum Einhängen von in Kammern beiderseits der Trennwand arbeitenden Drucklufthebern aufweisen, während das Querrohr eine Eingriffsöffnung für ein Verriegelungsglied besitzt, das in der Krone der Trennwand platziert ist und die Haltestruktur auf der Krone positioniert. Die Vertikalrohre der Haltestruktur verlaufen im Abstand von den Seiten der Trennwand nach unten. Die Haltestruktur lässt sich mit den Drucklufthebern oder nach Entnahme der Druckluftheber nach oben aus der Kleinkläranlage ausbauen. Die Haltestruktur hat keinerlei Strömungsleitfunktion für die Druckluftheber und bedingt einen relativ großen Überstand der Druckluftheber über die Krone der Trennwand, so dass ein erhebliches Maß an Stauhöhe verlorengeht.

Bei der aus DE 20 2006 000 564 U1 bekannten Kläranlage ist die Haltestruktur für mehrere, auf die Kammern verteilte Druckluftheber ein vertikal montierter Rohrabschnitt, in dem zwei diametral gegenüberliegende, nach unten offene Schlitze geformt sind. Der Rohrabschnitt wird von oben auf die Trennwand gesteckt, wobei die Schlitzränder dicht an den Seiten der Trennwand anliegen, so dass der über die Krone überstehende Rohrabschnitt beiderseits der Trennwand Tauchwände für einen Notüberlauf bildet, jedoch keine Strömungsleitfunktion für einen Druckluftheber leistet. An dem Rohrabschnitt sind innen und/oder außen Verrohrungen mehrerer Druckluftheber mit Befestigungselementen befestigt.

In den bekannten Kläranlagen vereinfachen die Haltestrukturen die Montage und Demontage oder Vormontage der Funktionskomponenten wie Druckluftheber oder dgl..

Aus DE 20 2005 003 588 U1 ist eine Kleinkläranlage mit mehreren in eine einzige Kammer hängenden Drucklufthebern als Funktionskomponenten bekannt. Die Druckluftheber sind in einem Deckel fixiert, der an der Trennwand an der Seite dieser Kammer abnehmbar montiert wird. Zur Montage des Deckels an der Trennwand ist an einem Auslaufrohr eines Drucklufthebers ein Spannbügel angebracht, der mit Werkzeug gegen die gegenüberliegende Seite der Trennwand anlegbar ist, und den Deckel seitlich an der Trennwand hält. Das Auslaufrohr liegt auf der Krone der Trennwand auf und trägt das gesamte Gewicht. Ein Mantelrohr mit Durchbrüche in unterschiedlichen Höhenlagen erfüllt in der einen Kammer dann eine Strömungsleitfunktion für die Druckluftheber, wenn das Mantelrohr von unten über die vom Deckel nach unten greifenden Teile der Druckluftheber gesteckt und mit Befestigungselementen am Deckel festgelegt ist. Das Mantelrohr verhindert, dass aus der einen Kammer einerseits zu grobe Schlammbestandteile und andererseits Schwimmschlammbestandteile angesaugt werden.

In den bekannten Kläranlagen vereinfachen die Haltestrukturen die Montage und Demontage oder Vormontage der Funktionskomponenten wie Druckluftheber oder dgl..

Der Erfindung liegt die Aufgabe zugrunde, eine Kläranlage sowie eine Haltestruktur für eine solche Kläranlage im Hinblick auf eine einfache, universelle, betriebssichere und anwenderfreundliche Montage bzw. Vormontage der Funktionskomponenten wie Druckluftheber oder dgl. zu verbessern.

Die gestellte Aufgabe wird mit den Merkmalen des Patentanspruchs 1 und den Merkmalen des Patentanspruchs 10 gelöst.

In der Kläranlage ermöglicht es die Haltestruktur, die Funktionskomponenten wie Druckluftheber bequem so unterzubringen, dass die Funktionskomponenten leicht in der Kläranlage gleichzeitig in verschiedenen Kammern montierbar und demontierbar oder in der Haltestruktur so vormontierbar sind, dass sie in Montierlage in beiden Kammern arbeiten. Die Haltestruktur leistet dabei in beiden Kammern eine wichtige Strömungsleitfunktion für die Funktionskomponenten. Die Montage bzw. Demontage ist ohne Hilfsmittel und bequem von außen, gegebenenfalls ohne in die Kläranlage einsteigen zu müssen, möglich.

Die hohle Haltestruktur ist leicht und deshalb bequem handhabbar. Sie ist weitgehend geschlossen, trägt die Funktionskomponenten und nimmt in mehreren Kammern deren untere Teile auf.

Die Funktionskomponenten sind sicher untergebracht, und sind auch einzeln entnehmbar bzw. in Einzelteile zerlegbar und aus der Haltestruktur ausbaubar, ohne die Haltestruktur mit anderen Funktionskomponenten ausbauen zu müssen. Die Haltestruktur verhindert dank der Strömungsleitfunktion, dass Schwimmschlamm oder grobe Schlammbestandteile vom Grund her angesaugt werden, weil sie gleichzeitig in beiden Kammern nur bestimmte Schichten der Inhalte der Kläranlage zu der Ansaugstelle einer Funktionskomponente vordringen lässt. Die Ansaugstellen der Funktionskomponenten lassen sich so für einen effizienten Klärbetrieb optimal positionieren. Der Wegfall jeglicher Befestigungselemente bedeutet nicht nur eine Kosteneinsparung, sondern erleichtert die Anfangsmontage und Wartungen erheblich, da nicht im Inneren der gegebenenfalls noch teilbefüllten oder stark verschmutzten Kläranlage mühsam mit Werkzeugen an teils schlecht zugänglichen Stellen und bei unangenehmen Arbeitsbedingungen gearbeitet zu werden braucht. Das erfindungsgemäße Konzept ist benutzerfreundlich und bietet den wichtigen Vorteil kaum möglicher Installationsfehler, da gegebenenfalls schon beim Hersteller korrekt installiert wird bzw. Fachpersonal bei Installation vor Ort eigentlich keine Fehler machen kann.

Die Haltestruktur ist kostengünstig herstellbar, zeichnet sich durch geringes Gewicht und deshalb verbesserte Handhabbarkeit aus, und erlaubt es, praktisch alle Funktionskomponenten der Kläranlage in mehreren Kammern, gegebenenfalls abgesehen von Komponenten einer Sensorik, zentral daran zu montieren und abzustützen.

Gegen Lösen unter Auftriebskräften oder Strömungskräften wird die Haltestruktur durch die Rastverbindung sicher an der Trennwand festgelegt. Die Rastverbindung ist ohne Hilfsmittel herstellbar und lösbar, und zwar durch einfache Bewegungen nach oben oder nach unten. Das Kunststoffmaterial der Haltestruktur in Verbindung gegebenenfalls mit einer vorbestimmten Wandstärke erbringt zumindest zum Herstellen, Halten und Lösen der Rastverbindung die notwendige Elastizität, so dass keinerlei Befestigungselemente benötigt werden, selbst wenn es sich um Kläranlagen erheblicher Tiefe bzw. Größe handelt.

Bei einer zweckmäßigen Ausführungsform ist die Trennwand zumindest in einem Montageabschnitt für die Haltestruktur oben zumindest einseitig verdickt, und hintergreift die Haltestruktur in der Montierlage die Verdickung, z.B. form- und kraftschlüssig. Die Haltestruktur braucht bei der Montage, gegebenenfalls bereits mit den vormontierten Funktionskomponenten, nurmehr von oben aufgedrückt zu werden, bis die Rastverbindung hergestellt ist. Dazu sind weder Spezialwerkzeuge noch Befestigungselemente erforderlich. Die Abnahme der Haltestruktur gestaltet sich genauso einfach, wobei jeweils die material- und wandstärkenbedingte Elastizität der Haltestruktur benutzt wird.

Um in Relation zur Innenhöhe des Behälters eine optimal große Stauhöhe der Trennwand nutzen zu können, ist in einer bevorzugten Ausführungsform in der Trennwand ein oben offener Ausschnitt vorgesehen, und ist die Haltestruktur am Grund des Ausschnittes und somit versenkt montiert, so dass für oben überstehende Komponententeile kein nennenswerter Freiraum unterhalb der Decke der Kläranlage vorgesehen zu werden braucht. Zusätzlich kann der Ausschnitt mit seinen seitlichen Ausschnittsrändern die Haltestruktur gegen seitliche Kippbewegungen oder dgl. abstützen, so dass die Haltestruktur ohne gesonderte Befestigungselemente auch seitlich festsitzt.

Ein besonders fester Sitz der montierten Haltestruktur ergibt sich, wenn an voneinander abgewandten Außenseiten des Kopfbereiches in Aufsteckrichtung orientierte Eingriffsvertiefungen für seitliche Ausschnittsränder eingeformt sind. Die montierte Haltestruktur füllt den Ausschnitt zumindest weitgehend dicht aus. Die Haltestruktur wird so zusätzlich gegen Kippen abgestützt. Dies schließt nicht aus, dass beispielsweise am Grund des Ausschnitts, ein Notüberlauf vorgesehen ist, für den die Haltestruktur als Tauchwand fungiert, die das Durchgehen beispielsweise von Schwimmschlamm verhindert.

Bei einer zweckmäßigen Ausführungsform ist in der Haltestruktur, z.B. an der Unterseite des Kopfbereiches, eine nach unten offene, vorzugsweise gerundete, Rastaufnahme geformt, in der die Verdickung der Trennwand aufgenommen wird. Die Rastaufnahme ist zumindest an einer Seite durch eine Erhebung begrenzt, die die Verdickung hintergreift.

Bei einer weiteren, vorteilhaften Ausführungsform weist die Haltestruktur unterhalb der Rastaufnahme zwei beabstandete, annähernd zueinander parallele, hohle Schenkel auf, die Teile der Funktionskomponenten enthalten und bei der Strömungsleitfunktion abschirmen, und die sich, vorzugsweise, in der Montierlage der Haltestruktur elastisch an den Seiten der Trennwand abstützen. Der Querschnitt des zwischen den Schenkeln der Haltestruktur vorgesehenen Freiraums kann zumindest weitgehend dem Querschnitt der Trennwand zumindest unterhalb des Montageabschnitts für die Haltestruktur entsprechen. Dadurch wird auch verhindert, dass sich dazwischen Ablagerungen in größerem Ausmaß bilden können.

Zum leichteren Handhaben der Haltestruktur, entweder mit den vormontierten Funktionskomponenten, oder auch ohne die Funktionskomponenten, können im Kopfbereich Montierhandhaben, z.B. Einhängeösen für ein Hebezeug oder dgl., angeformt sein.

Bei einer zweckmäßigen Ausführungsform der Haltestruktur weist ein Kopfbereich oberseitige Befestigungsbereiche für mehrere, die Funktionskomponenten bildende Druckluftheber auf, die mit ihren Steigrohren von oben einsteckbar sind. An der Unterseite des Kopfbereiches ist die Rastaufnahme geformt, mit der die Haltestruktur rittlings auf die Trennwand aufgeschnappt wird, wobei die Rastaufnahme zwischen den sich nach unten erstreckenden hohlen Schenkeln liegt, in denen die Teile der im Kopfbereich montierten Druckluftheber untergebracht und in beide Kammern eingebracht werden.

Zweckmäßig ist die Haltestruktur ein gegebenenfalls sogar einstückiger Spritzgussteil, Blasformteil oder Rotationsformteil, aus für Abwasser geeignetem Kunststoff. Dies ermöglicht eine kostengünstige Großserienproduktion und universelle Einsetzbarkeit der Haltestruktur. Alternativ ist es denkbar, die Haltestruktur jeweils aus mehreren Spritzgussteilen, Blasformteilen oder Rotationsformteilen zu fügen, z.B. durch Verschrauben, Verschweißen, Verkleben oder dgl..

Die Wandstärke sollte beispielsweise etwa 4,0 mm betragen. Bei einer Höhe der Haltestruktur von etwa 1,9 m kann das Gesicht etwa 25 kg betragen. Dies ermöglicht das bequeme Manipulieren beim Einsetzen oder Entnehmen der Haltestruktur (mit oder ohne Funktionskomponenten), um die Rastverbindung ohne Befestigungselemente oder Werkzeuge herstellen und lösen zu können.

Im Rahmen der Strömungsleitfunktion der Haltestruktur weist ein Schenkel unterhalb des Kopfbereiches bis zu einem Schlammsockel ein seitlich offenes Fenster auf. Ein Steigrohr eines Drucklufthebers, der z.B. zum Überführen von Belebtschlamm in eine Vorklärkammer vorgesehen ist, durchsetzt freiliegend das Fenster und ragt von oben lose in den Schlammsockel, z.B. in einen dort enthaltenen Schlammtopf. Sobald die Schichthöhe des Belebtschlamms zu groß wird, wird mittels des Drucklufthebers Belebtschlamm bis auf ein Niveau abgepumpt, das beispielsweise durch die Oberseite des Schlammsockels bestimmt ist. Denn es ist für eine biologische Klärfunktion erforderlich, nach dem Abpumpen eine vorbestimmte Menge an Belebtschlamm zu belassen.

Bei einer zweckmäßigen Ausführungsform wird in den Schlammsockel von oben ein Schlammrohrstutzen eingesteckt, der bodenseitig verschlossen und eine Art Topf bildet und in den das Steigrohr des Drucklufthebers von oben lose hineinragt, und der einen Überstand gegenüber der Oberseite des Schlammsockels hat. Mit dem Überstand des Schlammrohrstutzens lässt sich die Minimalhöhe des nach dem Abpumpen verbleibenden Belebtschlammes nach Bedarf einstellen. Beim Abpumpen wandert der Belebtschlamm im Zwischenraum zwischen dem Schlammrohrstutzen und dem Steigrohr nach unten zum Ansaugbereich des Steigrohres, ohne zum Ansaugbereich des gegebenenfalls im gleichen Schenkel enthaltenen Steigrohr des Klarwasser-Drucklufthebers zu gelangen.

Bei einer weiteren, zweckmäßigen Ausführungsform ermöglicht die Haltestruktur eine Montage einer weiteren Funktionskomponente, z.B. einer Belüftungseinrichtung für den Belebtschlamm. Vorzugsweise am Kopfbereich und/oder an wenigstens einem Schenkel ist außenseitig wenigstens ein annähernd vertikal orientiertes Führungsprofil angeordnet, auf dem eine Tragkonsole der Belüftungseinrichtung verschiebbar geführt ist. Die Belüftungseinrichtung lässt sich somit an dem Führungsprofil haltern und in der jeweils optimalen Höhenposition positionieren.

Damit die Belüftungseinrichtung nicht durch Auftriebskräfte oder Strömungskräfte aus ihrer gewählten Position verlagert wird, ist es zweckmäßig, die Tragkonsole aus Metall oder z.B. Gusseisen, oder Beton herzustellen, oder zumindest mit einem z.B. eingebetteten Metall- oder Betonballast auszustatten.

Die Belüftungseinrichtung ist zweckmäßig eine an der Konsole montierte Belüftungskerze (z.B. ein perforierter horizontaler Schlauchabschnitt) oder ein Belüftungsteller, jeweils mit zumindest einem Schlauchanschluss. Dabei erstreckt sich zweckmäßig von der Belüftungseinrichtung oder der Konsole eine Hochziehhandhabe wie ein Seilzug oder eine Kette zumindest bis zum Kopfbereich der Haltestruktur oder noch weiter nach oben. Mittels der Hochziehhandhabe kann die Position der Belüftungseinrichtung in der Kläranlage von oben oder außen eingestellt werden, und kann, z.B. zu Wartungszwecken, die Belüftungseinrichtung entlang des Führungsprofils hochgezogen und schließlich abgenommen werden.

Zweckmäßig dient sogar ein an dem Schlauchanschluss angeschlossener Druckluftschlauch als die Hochziehhandhabe, oder ist dieser Druckluftschlauch mit der Hochziehhandhabe kombiniert. Allerdings ist es durchaus denkbar, die Hochziehhandhabe getrennt vom Druckluftschlauch zu installieren und zu benutzen.

Zweckmäßig ist unterhalb des Kopfbereiches im Schenkel, vorzugsweise in dem Führungsprofil für die Belüftungseinrichtung, wenigstens eine seitliche Einlauföffnung vorgesehen, die einer in Höhenrichtung exakt definierten Schicht des Inhalts der Kläranlage den Zutritt zum Ansaugbereich des jeweiligen Drucklufthebers ermöglicht. Die Einlauföffnung hat beispielsweise als Strömungsleitfunktion eine Grobfilterfunktion und Siphonfunktion.

Zweckmäßig wird die Einlauföffnung hinter einer Abdeckung angeordnet, die einen sich von oben nach unten erstreckenden Zulaufkanal zur Einlauföffnung bildet, dessen untere Öffnung unterhalb des Höhenniveaus der Einlauföffnung liegt und Abwasser an einer optimalen Höhenposition oberhalb bodenseitigen Schlamms und unterhalb einer oberseitigen Schwimmschlammschicht ansaugen lässt (mehrfache Strömungsumlenkung bei der Strömungsleitfunktion).

Da in solchen Kläranlagen regelmäßige Kontrollen der Klärfunktion erforderlich sind, ist bei einer zweckmäßigen Ausführungsform gleich im Kopfbereich der Haltestruktur ein oben offener Probenahmetopf z.B. für Klarwasser vorgesehen. Alternativ könnte in dem Topf ein Probenahmeeimer platziert werden. Der Topf ist von einem der im Kopfbereich montierten Druckluftheber mit Klarwasser speisbar und wird nach unten über die Haltestruktur auf der Trennwand abgestützt. Vom Topf erstreckt sich ein Klarwasser-Ablaufstutzen aus dem Kopfbereich nach außen. Der Klarwasser-Ablaufstutzen wird dann an eine aus der Kläranlage führende Klarwasserableitung oder Pumpe angeschlossen. Alternativ könnte der Probenahmetopf auch seitlich am Kopfbereich unter dem Klarwasser-Ablaufstutzen angebracht und gegebenenfalls separat nach unten abgestützt sein.

Der jeweilige Befestigungsbereich für einen eine Funktionskomponente bildenden Druckluftheber weist zumindest einen Einsteckstutzen für das Steigrohr des Drucklufthebers und einen Verriegelungshebel am Kopfbereich auf.

Der Verriegelungshebel kann für eine Doppelfunktion zweischenkelig ausgebildet und an einem Kragen des Einsteckstutzens oben auf dem Kopfbereich schwenkbar gelagert werden. An jedem Schenkel des Hebels sind zwei unterschiedlich weit von der Schwenklagerung entfernte Verriegelungsnasen jeweils für ein Sperrglied am Steigrohr und ein Sperrglied an einem in das Steigrohr einsetzbaren Druckluft-Fitting vorgesehen. Mit dem Hebel lassen sich somit beide Funktionskomponententeile, d.h. das Druckluftheber-Steigrohr und das Druckluft-Fitting gemeinsam oder getrennt abnehmbar festlegen.

Die Sperrglieder sind jeweils außenseitige Vorsprünge, die von den Verriegelungsnasen des Hebels hintergriffen werden. Das Steigrohr ist mit einem Steigrohrkopf verbunden, der einen Auslauf, einen Sitz und einen Kragen aufweist. Das Druckluft-Fitting besitzt einen in den Sitz passenden Fußteil, ein am Fußteil angeschlossenes Druckluftrohr oder einen Druckluftschlauch, der direkt im Inneren des Steigrohres verläuft, und einen Druckluftanschluss.

Bei einer zweckmäßigen Ausführungsform ist der Verriegelungshebel mit der Doppelfunktion zwischen zumindest drei Funktionsstellungen verschwenkbar. In einer Arretierstellung verriegelt er gleichzeitig beide Sperrglieder des Steigrohrkopfes und des Druckluft-Fittings an der Haltestruktur, so dass diese Funktionskomponententeile miteinander verbunden und im Kopfbereich festgelegt sind. In einer Teillösestellung gibt der Hebel das Sperrglied des Druckluft-Fittings frei, während er das Sperrglied des Steigrohrkopfes nach wie vor arretiert. In dieser Teillösestellung lässt sich das Druckluft-Fitting aus dem Steigrohrkopf entnehmen. In einer Volllösestellung werden beide Sperrglieder freigegeben, so dass sowohl der Steigrohkopf mit dem Steigrohr als auch das Druckluft-Fitting ausbaubar sind. Der Verriegelungshebel ermöglicht z.B. eine bequeme Einhandbedienung, und erfordert keine zusätzliche Befestigungselemente oder Werkzeuge zum Festlegen oder Freigeben der jeweiligen Komponententeile.

Bei einer zweckmäßigen Ausführungsform sind alle in der Haltestruktur untergebrachten Druckluftheber in den verschiedenen Kammern baugleich (kostengünstige Gleichteil-Philosophie, ermöglicht durch die individuell gestaltbare Strömungsleitfunktion der Haltestruktur für jeden Druckluftheber) oder zumindest im Wesentlichen baugleich.

Zweckmäßig weist der Kragen am Kopfbereich mehrere in Umfangsrichtung verteilte Löcher aufweist, die als wahlweise Schwenklagerungen für einen Doppelfunktions-Verriegelungshebel nutzbar sind, um jeden Steigrohrkopf in einer gewünschten Drehposition seines Auslaufes montieren zu können, d.h. beispielsweise nur den Auslauf des Drucklufthebers für Klarwasser in den Probenahmetopf zu richten, hingegen die Ausläufe der anderen Druckluftheber so zu orientieren, dass weder verschmutztes Abwasser noch Belebtschlamm beim Arbeiten des Drucklufthebers in den Probenahmetopf gelangt, noch die Ausläufe der anderen Druckluftheber den Zugriff zum Probenahmetopf behindern.

Ferner kann es zweckmäßig sein, an der Haltestruktur im Kopfbereich zumindest einen Leerbefestigungsbereich für einen bedarfsweise einsetzbaren Druckluftheber oder eine andere Funktionskomponente vorzusehen. Dies erweitert den Einsatzbereich der Haltestruktur in universeller Weise.

Anhand der Zeichnungen werden Ausführungsformen des Erfindungsgegenstandes erläutert. Es zeigen:
- Fig. 1: eine perspektivische Schnittdarstellung einer Kläranlage mit einer Haltestruktur in Montierlage und in der Haltestruktur untergebrachten Funktionskomponenten in Form von Drucklufthebern,
- Fig. 2: eine Perspektivansicht der mit Funktionskomponenten bestückten Haltestruktur, in vergrößertem Maßstab,
- Fig. 3: einen Vertikalschnitt eines Kopfbereiches der Haltestruktur von Fig. 2,
- Fig. 4: einen Horizontalschnitt in einer Schnittebene IV - IV in Fig. 2, und
- Fig. 5: eine Ansicht der montierten Haltestruktur in der Kläranlage von Fig. 1 in Blickrichtung entlang der Achse eines Ablaufrohres.

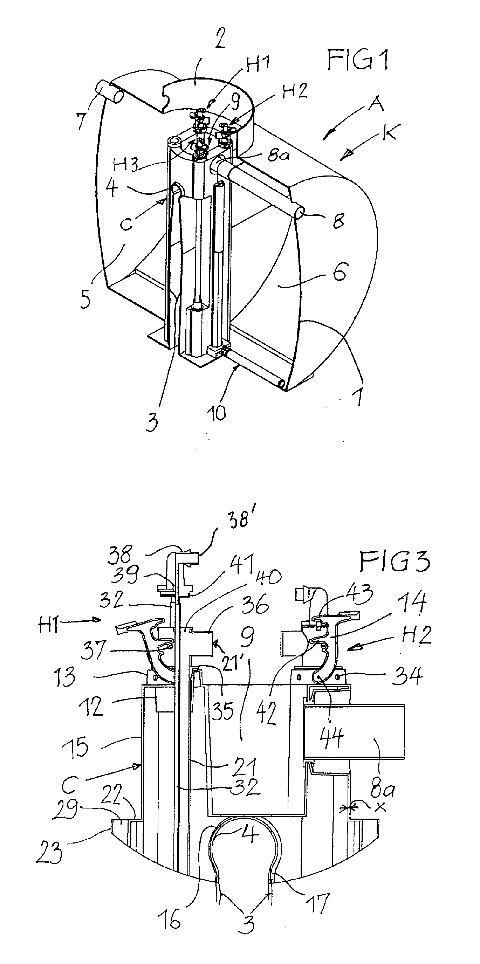

Eine in Fig. 1 schematisch angedeutete Kläranlage A, insbesondere eine sogenannte Kleinkläranlage K, weist einen beispielsweise aus Kunststoff hergestellten Behälter 1 mit einem obenliegenden Zugang 2 und wenigstens einer Trennwand 3 auf, die im oberen Randbereich zumindest in einem Montierabschnitt für eine Haltestruktur C eine Verdickung 4 besitzt und im Behälter 1 mehrere Kammern 5, 6 (z.B. eine Vorklärkammer 5; und eine Klärkammer 6) voneinander trennt.

In der Haltestruktur C, die von oben rittlings auf der Trennwand 3 montiert und durch eine elastische Rastverbindung festgelegt ist, sind in den verschiedenen Kammern 5, 6 mehrere Funktionskomponenten der Kläranlage A installiert, in der gezeigten Ausführungsform erste, zweite und dritte Druckluftheber H1, H2 und H3 in beiden Kammern 5, 6 sowie gegebenenfalls auch eine Belüftungseinrichtung 10 in der Kammer 6. Zur Vorklärkammer 5 führt ein Zulauf 7. Aus der Klärkammer 6 führt ein Ablaufrohr 8 nach außen, das an einen Ablaufstutzen 8a der Haltestruktur C angeschlossen ist. Oben ist in der Haltestruktur C beispielsweise ein Probenahmetopf 9 für Klarwasser eingeformt.

Die Haltestruktur C kann zum Installieren sämtlicher Funktionskomponenten der Kläranlage A in den verschiedenen vorgesehenen Kammern 5, 6 benutzt werden, die somit nicht getrennt installiert zu werden brauchen. Abgesehen von gegebenenfalls sicherheitstechnischen Sensorik-Komponenten können sich demzufolge alle Funktionskomponenten an der Haltestruktur C befinden und, falls gewünscht, in vormontiertem Zustand mit dieser in die Kläranlage A eingesetzt oder daraus entnommen werden. Alternativ kann die Haltestruktur C auch zunächst für sich eingebaut und mittels der Rastverbindung ohne Werkzeuge und Befestigungselemente festgelegt werden, ehe die Funktionskomponenten für die verschiedenen Kammern 5, 6 eingebaut werden. Die Funktionskomponenten könnten Pumpvorrichtungen mit Pumpen oder dgl. sein.

Die Haltestruktur C ist ein hohler, vorzugsweise einstückiger, weitestgehend geschlossener Kunststoff-Formteil, beispielsweise ein Spritzgussteil, Blasformteil oder Rotationsformteil, oder ist aus mehreren solcher Teile zusammengesetzt. Beispielsweise hat die Haltestruktur C, die für die Funktionskomponenten in jeder Kammer 5, 6 eine Strömungsleitfunktion leistet, eine Höhe von etwa 1,9 m bei einem Gewicht von etwa 25 kg und einer Wandstärke von etwa 4,0 mm. Die Haltestruktur C nimmt zweckmäßigerweise mehrere Funktionskomponenten beispielsweise in Form der Druckluftheber H1 - H3 für die Kammern 5, 6 auf. Die hohle Haltestruktur C kann allseits, d.h. auch unten und oben, geschlossen sein, ausgenommen für die Strömungsleitfunktionen erforderliche Öffnungen.

Der Druckluftheber H1 dient beispielsweise dazu, Abwasser aus der Vorklärkammer 5 in die Klärkammer 6 zu transferieren, wobei die Vorklärkammer 5 bodenseitig einen Schlammfang bildet und zur Strömungsberuhigung dient. Der zweite Druckluftheber H2 dient zum Pumpen von Klarwasser aus der Klärkammer 6 entweder direkt in den Ablaufrohrstutzen 8a oder in den oberseitig eingeformten Probenahmetopf 9, aus dem der Ablaufrohrstutzen 8a nach außen führt. Der dritte Druckluftheber H3 dient beispielsweise dazu, überschüssigen Belebtschlamm aus der Klärkammer 6 zur Entsorgung in die Vorklärkammer 5 zurückzupumpen.

Die Belüftungseinrichtung 10, die in Fig. 1 an der Haltestruktur C montiert ist, dient zur Belüftung von Belebtschlamm in der Klärkammer 6. Weitere Funktionskomponenten wie Schwimmerschalter, Sensoren, Spüleinrichtungen oder dgl. könnten ebenfalls an der Haltestruktur C montiert oder vormontiert sein (nicht gezeigt). Die Haltestruktur C ist ein Hohlkörper, der mit elastischer Vorspannung rittlings auf der Trennwand 3 sitzt und lösbar an der Trennwand 3 verrastet ist.

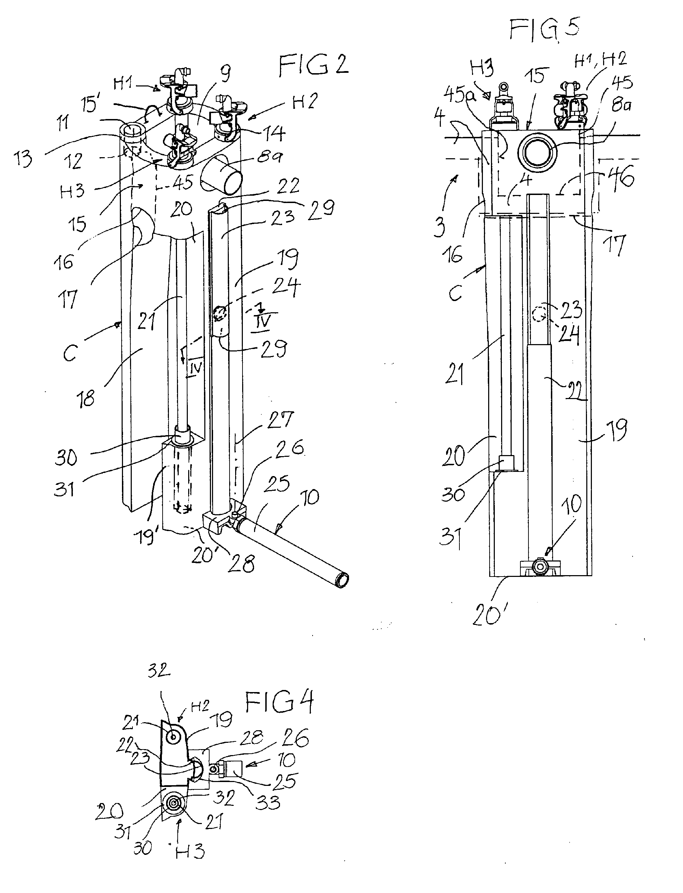

In Fig. 2 weist die Haltestruktur C einen als hohler Kasten ausgebildeten Kopfbereich 15 mit oberseitigen Befestigungsbereichen 11 für in der gezeigten Ausführungsform vier Funktionskomponenten beispielsweise in Form von Drucklufthebern H1 - H3 auf. In jedem Befestigungsbereich 11 ist ein Einsteckstutzen 12 für ein jeweiliges Steigrohr 21 eines Drucklufthebers an einem oberseitigen Kragen 13 vorgesehen. Drei installierte Druckluftheber H1, H2, H3 lassen den vierten Befestigungsbereich 11 frei. Es könnten auch mehr Befestigungsbereiche 11 oder nur so viele vorgesehen sein, wie Druckluftheber.

Zum Festlegen jedes Drucklufthebers H1 - H3 dient hier ein Doppelfunktions-Verriegelungshebel 14, der in einer wählbaren Schwenklagerung von 44 mehreren am Kragen 13 schwenkbar angeordnet ist. Am Kopfbereich 15 kann zumindest eine Manipulationshandhabe 15', z.B. eine Einhängeöse für ein Hebezeug oder ein Seil, angeformt oder angebracht sein.

An der Unterseite des Kopfbereiches 15 ist eine Rastaufnahme 16 geformt, die bei der gezeigten Ausführungsform gerundet und nach unten offen ist und durch seitliche Erhebungen 17 begrenzt wird. Die Rastaufnahme 16 (Fig. 3) erstreckt sich beispielsweise über mehr als einen Halbkreis und dient dazu, unter Nutzen der Elastizität der Haltestruktur C, mit der Verdickung 4 der Trennwand 3 eine Rastverbindung herzustellen, dank der die Haltestruktur C ohne weitere Hilfsmittel gegen Auftriebskräfte und Strömungskräfte an der Trennwand 3 festgelegt wird. Beiderseits der Rastaufnahme 16 erstrecken sich in der Haltestruktur C Schenkel 18, 19 zueinander im Wesentlichen parallel und beabstandet nach unten, die in der Montierlage der Haltestruktur (Fig. 1) auf dem Boden des Behälters 1 aufstehen oder fast aufstehen. Die Schenkel 18, 19 können unten durch Böden 20' verschlossen sein.

Jeder Druckluftheber H1 - H3 (die Druckluftheber H1 - H3 können baugleich sein) weist ein Steigrohr 21 auf, das sich im Schenkel 18, 19 nach unten bis nahe zum Boden 20' erstreckt und unten offen ist und für das der Schenkel 18, 19 eine Strömungsleitfunktion in der jeweiligen Kammer 5, 6 leistet.

Zumindest am Schenkel 19 ist außenseitig ein vertikal orientiertes Führungsprofil 22 angeformt oder angebracht, auf dem die Belüftungseinrichtung 10 geführt verschiebbar und in der erforderlichen Höhenlage positionierbar ist. Jeder Schenkel 18, 19 enthält hier an einer bestimmten Höhenposition zumindest eine Einlauföffnung 24. In Fig. 2 ist eine Einlauföffnung 24 direkt im Führungsprofil 22 angedeutet. Die Einlauföffnung 24 befindet sich hinter einer z.B. rinnenförmigen, Abdeckung 23, die am Führungsprofil 22 oder Schenkel 19 festgelegt ist und obere und untere Öffnungen 29 aufweist, wobei die untere Öffnung 29 unterhalb der Höhenposition der Einlauföffnung 24 liegt. Die obere Öffnung 29 könnte verschlossen sein.

Die Belüftungseinrichtung 10 ist bei der gezeigten Ausführungsform eine mit einem Druckluftanschluss 26 versehene Belüftungskerze 25 (beispielsweise ein perforiertes Schlauchstück) an einer Konsole 28. Die Konsole 28 hat eine Dichte bzw. ein Gewicht, mit dem sie durch Auftriebskräfte z.B. der Belüftungseinrichtung 10 nicht entlang des Führungsprofils 22 verlagert wird. Beispielsweise besteht die Konsole 28 aus Metall (z.B. Gusseisen) oder Beton oder ist sie mit einem entsprechenden Ballastgewicht ausgestattet. Eine Hochziehhandhabe 27 dient dazu, die Konsole 28 mit der Belüftungseinrichtung 10 von oben entlang des Führungsprofils 22 auf die gewünschte Höhe abzusenken, oder zu Wartungsarbeiten hochzuziehen und vom Führungsprofil 22 abzunehmen. Die Hochziehhandhabe 27 könnte ein Seilzug oder eine Kette zumindest bis zum Kopfbereich 15 der Haltestruktur C oder bis oben aus dem Behälter 1 sein. Alternativ kann als Hochziehhandhabe 27 ein Druckluftschlauch benutzt werden, der am Druckluftanschluss 26 der Belüftungseinrichtung 10 angeschlossen ist. Die Konsole 28 ist mit einem Führungsinnenprofil 33 (Fig. 4) geformt, das auf das Führungsprofil 22 passt und über die Abdeckung 23 hinweggeführt werden kann.

Im Schenkel 19 (Fig. 2 und 4) ist ein seitlich offenes Fenster 20 ausgespart, durch das sich das Steigrohr 21 des Drucklufthebers H3 nach unten lose in einen Schlammsockel 19' erstreckt. Der Schlammsockel 19' bestimmt mit seiner Oberseite eine Mindesthöhe an beim Abpumpen von Belebtschlamm aus der Klärkammer 6 in die Vorklärkammer 5 mittels des Drucklufthebers H3 in der Klärkammer 6 verbleibendem Belebtschlamm und kann einen oben offenen Schlammtopf bilden oder enthalten.

Als Alternative ist in Fig. 2 von oben in den Schlammsockel 19' ein bodenseitig geschlossener Schlammrohrstutzen 30 über eine halternde Dichtung 31 eingesteckt, in den das Steigrohr 21 von oben lose eindringt. Das obere Ende des Schlammrohrstutzens 30 steht über den Schlammsockel 19' nach oben vor und definiert mit seinem Überstand die Mindesthöhe des beim Abpumpen in der Klärkammer 6 verbleibendem Belebtschlamms. Diese Mindesthöhe kann durch Verstellen der Einstecktiefe des Schlammrohrstutzens 30 eingestellt werden, oder durch Verwenden unterschiedlich langer Schlammrohrstutzen 30.

Fig. 4 zeigt ferner, dass in jedem Steigrohr 21 eines Drucklufthebers H2, H3 ein Druckluftschlauch oder ein Druckluftrohr 32 installiert ist, das sich von oben bis zu einer bestimmten Höhenlage oberhalb des unteren Endes des Steigrohres 21 nach unten erstreckt, und dazu dient, mittels eingeblasener Druckluft nach dem bekannten Druckluftheber-Prinzip Abwasser und/oder Verschmutzungen und/oder Schlamm nach oben in den Ablauf zu fördern.

Die Belüftungseinrichtung 10 dient dazu, durch Einblasen von Druckluft den Belebtschlamm zu einer biologischen Klärfunktion in der Klärkammer 6 zu aktivieren und aktiv zu halten. Die Füllstände in den Kammern 5, 6 sind so gewählt, dass eine obenschwimmende, nicht gezeigte Schwimmschlammschicht nicht zwischen den Kammern 5 und 6 hin- und herpassiert, und auch nicht in den oben in den Kopfbereich 15 eingeformten Klarwasser-Probenahmetopf 9 einzudringen vermag.

Als zweckmäßige Alternative kann im Kopfbereich 15 an voneinander abgewandten Seiten jeweils eine annähernd vertikal orientierte Eingriffsvertiefung 45 eingeformt sein, die gemäß Fig. 5 dazu dient, die Haltestruktur C in einem in der Trennwand 3 geformten, annähernd U-förmigen, nach oben offenen Ausschnitt 46 versenkt anzuordnen, so dass die Oberseite des Kopfbereiches 15 mit der Krone der Trennwand 3 bündig ist oder nur geringfügig darüber vorsteht. Seitliche Ausschnittsränder 45a des Ausschnitts 46 greifen führend und stabilisierend in die Eingriffsvertiefungen 45 der Haltestruktur C ein, während die Rastaufnahme 16 mit der Verdickung 4 verrastet ist und die Erhebungen 17 die Verdickung 4 hintergreifen. Die beiden Schenkel 18, 19 können sich, vorzugsweise, elastisch an den Seiten der Trennwand 3 abstützen. D.h., dass der Freiraum zwischen den Schenkeln 18, 19 und in der Rastaufnahme 16 im Querschnitt weitestgehend dem Querschnitt der Trennwand 3 entspricht.

Alternativ könnte die Haltestruktur C auch auf der gerade durchgehenden Krone der Trennwand 3 montiert werden. Bei der in Fig. 5 angedeuteten Montage der Haltestruktur C mit dem versenkt in dem Ausschnitt 46 platzierten Kopfbereich 15 dichtet der Kopfbereich 15 weitgehend gegen eine Überströmung zwischen den Kammern 5, 6 ab. Nicht gezeigt ist ein Notüberlauf, der beispielsweise am Grund des Ausschnitts 46 gebildet ist, um Wasser (ohne die Schwimmschlammschicht) in bestimmten Betriebszuständen zwischen den Kammern 5, 6 übertreten zu lassen.

Die Verdickung 4 der Trennwand 3 kann sich auch entlang der seitlichen Ausschnittsränder 45a und entlang des unteren Randes des Ausschnittes 46 erstrecken, oder wird nur entlang des unteren Randes des Ausschnitts 46 vorgesehen. Die Anzahl der Befestigungsbereiche 11 für Funktionskomponenten wie die Druckluftheber H1 - H3 kann von der gezeigten Anzahl abweichen. Die Druckluftheber H1 - H3 werden an nicht Druckluftspeiseleitungen angeschlossen, die zu einem nicht gezeigten Verteiler führen, der seinerseits an eine Druckquelle, z.B. einen Kompressor außerhalb des Behälters 1, angeschlossen ist, und beispielsweise mehrere Magnetventile enthält, die elektrisch mit einer Klärsteuerung verbunden sind. Der Verteiler könnte ebenfalls im Behälter 1 untergebracht werden, beispielsweise im Bereich des Zugangs 2, so dass nur noch eine elektrische Leitung und eine Druckluftspeiseleitung in den Behälter zu verlegen sind, hingegen die Druckluftleitungen zwischen dem Verteiler und den Drucklufthebern H1 - H3 vorinstallierbar sind. Der Verteiler könnte sogar auf der Haltestruktur C angeordnet sein oder sich zumindest darauf abstützen, wobei er herausnehmbar angeordnet wird, um bei Bedarf den Zugang zu den Drucklufthebern H1 - H3 bzw. der Haltestruktur C freizugeben.

Die Schnittdarstellung in Fig. 3 verdeutlicht die Rastverbindung zwischen der Rastaufnahme 16 mit ihren Erhebungen 17 und der Verdickung 4 der Trennwand 3 zumindest im Montierabschnitt für die Haltestruktur C. Der Kopfbereich 15 ist wie auch die Schenkel 18, 19 hohl ausgebildet und weist eine zumindest bereichsweise vorbestimmte Wandstärke x von etwa 4,0 mm auf. In jedem Kragen sind in Umfangsrichtung mehrere Sacklöcher 34 verteilt, in die Schwenkzapfen (Schwenklagerung 44) des Doppelfunktions-Verriegelungshebels 14 wahlweise so einklinkbar sind, dass eine bestimmte Drehposition jedes Drucklufthebers H1 - H3 wählbar ist.

Jeder Druckluftheber H1 - H3 weist in Fig. 3 das Steigrohr 21 mit der darin installierten Druckluftleitung 32 (oder dem Druckluftschlauch) auf. Das Steigrohr 21 führt zu einem Steigrohrkopf 21', der einen obenliegenden Sitz 40, einen seitlichen Auslauf 36 und einen Aufsetzkragen 35 besitzt. Der Aufsetzkragen 35 wird auf die Oberseite des Kragens 13 aufgesetzt, um den Druckluftheber H1 - H3 festzulegen. In den Sitz 40 wird ein Fußteil 41 eines Druckluft-Fittings 38 eingesetzt. Das Druckluft-Fitting 38 weist einen Druckluftanschluss 38' und ein Sperrglied 39 in Form zweier äußerer Vorsprünge auf, an denen der Hebel 14 zum Angriff bringbar ist. Auch der Steigrohrkopf 21' weist ein Sperrglied 37 in Form zweier außenseitiger Vorsprünge auf, an denen der Hebel 14 zum Angriff bringbar ist.

Der Verriegelungshebel 14 ist doppelschenkelig und weist an jedem Schenkel zwei unterschiedlich weit von der Schwenklagerung 44 beabstandete Verriegelungsnasen 42, 43 auf. Die Verriegelungsnasen 42 dienen zum Angriff am Sperrglied 37 des Steigrohrkopfes 21', während die Verriegelungsnasen 43 zum Angriff am Sperrglied 39 des Druckluft-Fittings 38 dienen.

Der Verriegelungshebel 14 ist zumindest zwischen drei unterschiedlichen Positionen verschwenkbar. In der in Fig. 3, rechts, gezeigten Arretierstellung werden beide Verriegelungsglieder 39, 37 gleichzeitig nach unten gespannt, so dass der Steigrohrkopf 21' auf dem Kragen 13 und das Druckluft-Fitting 38 im Sitz 40 festgelegt sind. In einer Teillösestellung (Fig. 3, links) greift nur noch die Verriegelungsnase 42 am Sperrglied 37 an, so dass der Steigrohrkopf 21' auf dem Kragen 13 festgelegt bleibt, während das Sperrglied 39 des Druckluft-Fittings 38 freigegeben ist, das somit nach oben herausgezogen werden kann. In einer vollständigen Lösestellung (in Fig. 3 nicht gezeigt) geben die beiden Verriegelungsnasen 42, 43 beide Sperrglieder 39, 37 frei, so dass sowohl das Druckluft-Fitting 38 als auch der Steigrohrkopf 21' nach oben herausgezogen werden können.

Bei einer nicht gezeigten Alternative können für jeden Druckluftheber auch zwei voneinander getrennte Verriegelungshebel für jeweils eine Verriegelungsfunktion vorgesehen sein. Ferner ist es möglich, die Festlegung des jeweiligen Steigrohrkopfes 21' bzw. Druckluft-Fittings 38 auf andere Weise zu gestalten, zweckmäßig jedoch lösbar. Der Ablaufrohrstutzen 8a durchsetzt den Kopfbereich 15 von dem Probeentnahmetopf 9 für das Klarwasser nach außen, wo die Ablaufleitung 8 angeschlossen ist.

Die Verdickung 4 und die Rastaufnahme 16 brauchen nicht notwendigerweise gerundet zu sein, sondern es könnte jegliche passende geometrische Querschnittsform in diesem Bereich vorgesehen werden, um die elastisch aufweitbare Rastverbindung zwischen der Haltestruktur C und der Trennwand 3 herstellen zu können.

In der gezeigten Ausführungsform wird die Haltestruktur C von oben nach unten auf die Trennwand 3 aufgesetzt, bis die Verdickung 4 in die Rastaufnahme 16 eingedrungen ist und von den Erhebungen 17 hintergriffen wird. Dann ist die Haltestruktur gegen Abziehen nach oben auf der Trennwand 3 festgelegt, beispielsweise unter Auftriebskräften oder Strömungskräften. Dazu ist es gegebenenfalls notwendig, beim Aufsetzen der Haltestruktur C mit Druck von oben nachzuhelfen. Zur Abnahme der Haltestruktur C von der Trennwand 3 braucht nur nach oben gezogen zu werden, bis sich die Elastizität in der Rastverbindung auswirkt, und die Erhebungen 17 die Verdickung 4 passieren lassen, gegebenenfalls unter leichtem Aufspreizen der Schenkel 18, 19.

## Patentansprüche

1. Kläranlage (A), insbesondere Kleinkläranlage (K), mit mehreren durch zumindest eine Trennwand (3) separierten Kammern (5, 6) und mehreren wenigstens jeweils einer Kammer zugeordneten Funktionskomponenten, und einer Haltestruktur, an der die Funktionskomponenten wie Druckluftheber (H1 - H3) und/oder dgl. untergebracht und mittels der Haltestruktur (C) an der Trennwand (3) montierbar sind, **dadurch gekennzeichnet, dass** die Haltestruktur (C) ein hohler Kunststoff-Formteil für Funktionskomponenten mindestens zweier Kammern (5, 6) ist und in jeder Kammer (5, 6) eine Strömungsleitfunktion für wenigstens eine Funktionskomponente aufweist.

2. Kläranlage nach Anspruch 1, **dadurch gekennzeichnet, dass** die Haltestruktur (C) von oben rittlings auf die Trennwand (3) aufgesteckt und entgegengesetzt zur Auftriebsrichtung durch wenigstens eine quer zur Aufsteckrichtung elastisch aufweitbare Rastverbindung an der Trennwand (3) festgelegt ist.

3. Kläranlage nach Anspruch 2, **dadurch gekennzeichnet, dass** die Trennwand (3) zumindest in einem Montageabschnitt für die Haltestruktur (C) zumindest einseitig verdickt ist, und dass die montierte Haltestruktur (C) die Verdickung (4) im Bereich der Rastverbindung hintergreift.

4. Kläranlage nach Anspruch 3, **dadurch gekennzeichnet, dass** in der Trennwand (3) ein nach oben offener, angenähert U-förmiger Ausschnitt (46) vorgesehen ist, dessen unterer Randabschnitt den Montageabschnitt definiert, und dass die einen Kopfbereich (15) mit oberseitigen Befestigungsbereichen (11) zumindest für Druckluftheber (H1 - H3) aufweisende Haltestruktur (C) mit dem Kopfbereich (15) in dem Ausschnitt (46) versenkt montiert und, vorzugsweise, zusätzlich an wenigstens einem seitlichen Ausschnittsrand (45a) geführt abgestützt ist.

5. Kläranlage nach Anspruch 4, **dadurch gekennzeichnet, dass** in zwei voneinander abgewandten Außenseiten des Kopfbereiches (15) in Aufsteckrichtung orientierte Eingriffsvertiefungen (45) für seitliche Ausschnittsränder (45a) des Ausschnittes (46) der Trennwand (3) eingeformt sind.

6. Kläranlage nach Anspruch 2, **dadurch gekennzeichnet, dass** in der Haltestruktur (C), vorzugsweise an der Unterseite eines obenliegenden Kopfbereiches (15), eine, vorzugsweise gerundete, nach unten offene Rastaufnahme (16) für die Trennwand (3) geformt ist, und dass die Rastaufnahme (16) an zumindest einer Seite durch eine Erhebung (17) begrenzt ist.

7. Kläranlage nach Anspruch 6, **dadurch gekennzeichnet, dass** die Haltestruktur (C) unterhalb der Rastaufnahme (16) zwei beabstandete, annähernd zueinander parallele und hohle Schenkel (18, 19) aufweist, in denen Teile der Funktionskomponenten enthalten sind, und dass sich die Schenkel (18, 19), vorzugsweise, in der Montierlage der Haltestruktur (C) in den Kammern (5, 6) an beiden Seiten der Trennwand (3) elastisch abstützen.

8. Kläranlage nach Anspruch 6, **dadurch gekennzeichnet, dass** der Querschnitt eines zwischen den Schenkeln (18, 19) bis in die Rastaufnahme (16) führenden Ausschnitts der Haltestruktur (C) weitestgehend dem Querschnitt der Trennwand (3) zumindest unterhalb des Montageabschnittes entspricht.

9. Kläranlage nach Anspruch 1, **dadurch gekennzeichnet, dass** an der Haltestruktur (C), vorzugsweise im Kopfbereich (15), zumindest eine Montierhandhabe (15'), vorzugsweise eine oder mehrere Einhängeösen, angeformt ist.

10. Haltestruktur (C) für mehrere Funktionskomponenten wie Druckluftheber (H1 - H3) und/oder dgl. einer Kläranlage (A), insbesondere einer Kleinkläranlage (K), wobei die Haltestruktur (C) von oben an einer Trennwand (3) der Kläranlage (A) montierbar ist, **dadurch gekennzeichnet, dass** die Haltestruktur (C) ein hohler Kunststoff-Formteil ist, in welchen unterseitig eine von oben rittlings auf die Trennwand (3) aufsteckbare, quer zur Aufsteckrichtung elastisch aufweitbare Rastaufnahme (16) und oberseitig Befestigungsbereiche (11) für die Funktionskomponenten eingeformt sind.

11. Haltestruktur nach Anspruch 10, **dadurch gekennzeichnet, dass** die Haltestruktur (C) einen Kopfbereich (15) mit den oberseitig angeordneten Befestigungsbereichen (11) für mehrere, von oben einsteckbare Druckluftheber (H1 - H3) aufweist, an dem an der Unterseite die Rastaufnahme (16) und zwei die Rastaufnahme (16) zwischen sich aufnehmende, annähernd zueinander parallele, hohle Schenkel (18, 19) zum Aufnehmen der Druckluftheber (H1 - H3) und zum Ausbilden der jeweiligen Strömungsleitfunktion für die Druckluftheber (H1 - H3) geformt sind.

12. Haltestruktur nach Anspruch 10, **dadurch gekennzeichnet, dass** die Haltestruktur (C) ein, vorzugsweise einstückiger, Spritzgussteil, Blasformteil oder Rotationsformteil ist.

13. Haltestruktur nach Anspruch 11, **dadurch gekennzeichnet, dass** ein Schenkel (19) unterhalb des Kopfbereiches (15) ein bis zu einem Schlammsockel (19') offenes Fenster (20) aufweist, und dass ein Steigrohr (21) eines Drucklufthebers (H3) das Fenster (20) freiliegend durchsetzt und lose von oben in den Schlammsockel (19') eindringt, vorzugsweise lose in einen in den Schlammsockel (19') von oben mit einem Überstand eingesteckten, bodenseitig geschlossenen Schlammrohrstutzen (30) eindringt.

14. Haltestruktur nach Anspruch 13, **dadurch gekennzeichnet, dass** der Überstand des Schlammrohrstutzens (30) über den Schlammsockel (19') veränderbar ist.

15. Haltestruktur nach Anspruch 10, **dadurch gekennzeichnet, dass** an der Haltestruktur (C), vorzugsweise am Kopfbereich (15) und/oder an wenigstens einem Schenkel (18, 19), außenseitig wenigstens ein annähernd vertikal orientiertes Führungsprofil (22) angeordnet ist, und dass auf dem Führungsprofil (22) eine Tragkonsole (28) einer Belüftungseinrichtung (10) verschiebbar geführt ist.

16. Haltestruktur nach Anspruch 15, **dadurch gekennzeichnet, dass** die Tragkonsole (28) aus Metall oder Beton besteht, oder einen Metall- oder Betonballast aufweist.

17. Haltestruktur nach Anspruch 15, **dadurch gekennzeichnet, dass** die Belüftungseinrichtung (10) eine an der Konsole (28) montierte Belüftungskerze (25) oder ein Belüftungsteller mit einem Schlauchanschluss (26) ist, und dass sich von der Belüftungseinrichtung (10) oder der Konsole (28) eine Hochziehhandhabe (27) zumindest nach oben bis zum Kopfbereich (15) der Haltestruktur (C) erstreckt, wie ein Seilzug oder eine Kette oder dgl..

18. Haltestruktur nach Anspruch 17, **dadurch gekennzeichnet, dass** ein am Schlauchanschluss (26) angeschlossener Druckluftschlauch entweder mit der Hochziehhandhabe (27) kombiniert ist oder diese bildet.

19. Haltestruktur nach wenigstens einem der Ansprüche 10 bis 18, **dadurch gekennzeichnet, dass** unterhalb des Kopfbereiches (15) im Schenkel (18, 19), vorzugsweise im Führungsprofil (22), als Teil der Strömungsleitfunktion wenigstens eine seitliche Einlauföffnung (24) vorgesehen ist.

20. Haltestruktur nach Anspruch 19, **dadurch gekennzeichnet, dass** die Einlauföffnung (24) innerhalb einer sich nach oben und unten erstreckenden Abdeckung (23) angeordnet ist, die einen zumindest unten offenen Zulaufkanal zur Einlauföffnung (24) bildet, dessen untere Öffnung unterhalb des Niveaus der Einlauföffnung (24) liegt.

21. Haltestruktur nach Anspruch 10, **dadurch gekennzeichnet, dass** im Kopfbereich (15) ein oben offener Probeentnahme-Topf (9) vorgesehen ist, der von einem im Kopfbereich (15) montierten Druckluftheber (H2) mit Klarwasser speisbar ist, und dass sich vom Topf (9) ein Klarwasser-Ablaufstutzen (8a) zur Außenseite des Kopfbereiches (15) erstreckt.

22. Haltestruktur nach Anspruch 10, **dadurch gekennzeichnet, dass** der Befestigungsbereich (11) am Kopfbereich (15) zumindest einen Einsteckstutzen (12) für ein Druckluftheber-Steigrohr (21) und wenigstens einen Verriegelungshebel (14) umfasst.

23. Haltestruktur nach Anspruch 22, **dadurch gekennzeichnet, dass** der Verriegelungshebel (14) zweischenkelig ausgebildet, an einem Kragen (13) des Einsteckstutzens (12) schwenkbar gelagert ist und an jedem Schenkel zwei unterschiedlich weit von der Schwenklagerung (44) entfernte Verriegelungsnasen (42, 43) jeweils für ein Sperrglied (37, 39) am Steigrohr (21) und ein in das Steigrohr (21) einsetzbaren Druckluft-Fitting (38) aufweist.

24. Haltestruktur nach Anspruch 23, **dadurch gekennzeichnet, dass** das Sperrglied (37) am Steigrohr (21) jeweils ein außenseitiger Vorsprung an einem einen Auslauf (36), einen Sitz (40) und einen Kragen (35) aufweisenden Steigrohrkopf (21'), und das Sperrglied (39) am Druckluft-Fitting (38) jeweils ein außenseitiger Vorsprung an dem einen in den Sitz (40) passenden Fußteil (41), ein am Fußteil angeordnetes Druckluftrohr oder einen -schlauch (32), und einen Druckluftanschluss (38') aufweisenden Druckluft-Fitting (38) ist.

25. Haltestruktur nach Anspruch 23, **dadurch gekennzeichnet, dass** der Verriegelungshebel (14) zwischen zumindest drei Funktionsstellungen verschwenkbar ist, vorzugsweise ausgehend von einer beide Sperrglieder (37, 39) gleichzeitig arretierenden Arretierstellung zu einer Teillösestellung nur mit Arretierung des Sperrgliedes (37) des Druckluftheber-Kopfes (21') und Freigabe des Sperrgliedes (39) des Druckluft-Fittings (38) bis zu einer vollen Lösestellung mit Freigabe beider Sperrglieder (37, 39), und umgekehrt.

26. Haltestruktur nach Anspruch 23, **dadurch gekennzeichnet, dass** der Kragen (13) in Umfangsrichtung verteilte Löcher (34) für wählbare Drehpositionen des Verriegelungshebels (14) aufweist.

27. Haltestruktur nach Anspruch 10, **dadurch gekennzeichnet, dass** die in der Haltestruktur montierbaren Druckluftheber (H1 - H3) baugleich sind.

28. Haltestruktur nach Anspruch 10, **dadurch gekennzeichnet, dass** die Haltestruktur (C) wenigstens einen Leerbefestigungsbereich (11) für eine bedarfsabhängig hinzunehmbare weitere Funktionskomponente wie einen Druckluftheber oder dgl. aufweist.
